# EUROPEAN PATENT SPECIFICATION

(11) **EP 0 471 851 B1**
(45) Date of publication and mention of the grant of the patent: **05.06.1996**
(21) Application number: 91905337.1
(22) Date of filing: 04.03.1991
(51) Int. Cl.: G03G 5/02

(54) **ELECTROSTATIC INFORMATION RECORDING MEDIUM**
ELEKTROSTATISCHES INFORMATIONSAUFZEICHNUNGSMEDIUM
SUPPORT ELECTROSTATIQUE D'ENREGISTREMENT D'INFORMATIONS

(30) Priority: 08.03.1990 JP 57351/90
(43) Date of publication of application: 26.02.1992
(73) Proprietor: DAI NIPPON PRINTING CO., LTD., Tokyo 162-01 (JP)
(72) Inventor: IIJIMA, Masayuki, Dai Nippon Printing Co., Ltd., Shinjuku-ku, Tokyo 162 (JP); TAKE, Seiji, Dai Nippon Printing Co., Ltd., Shinjuku-ku, Tokyo 162 (JP)
(74) Representative: Dixon, Donald Cossar
(86) International application number: JP9100283
(87) International publication number: WO9114206

(56) References cited:
- JP-A- 5 647 042
- JP-U-52 142 841
- WORLD PATENTS INDEX LATEST Week 0991,September 1991 Derwent Publications Ltd., London, GB; AN 91-061130 & JP-A-3 009 367 & CHEMICAL ABSTRACTS, vol. 115, 19 August 1991, Columbus, Ohio, US; SUGIYAMA ET AL.: 'ELECTROPHOTOGRAPHIC PHOTORECEPTOR WITH SURFACE LAYER MADE OF FLUORINE-CONTAINING CYCLIC POLYMER'
- PATENT ABSTRACTS OF JAPAN vol. 9, no. 265 (P-399)(1988) 23 October 1985 & JP-A-60113244 ( CANON ) 19 June 1985

## Description

### Technical Field

The present invention relates to an electrostatic information recording medium which enables information to be recorded thereon electrostatically by, for example, a method wherein exposure is effected under application of a voltage, and which also permits the recorded information to be reproduced at any desired time. More particularly, the present invention relates to an electrostatic information recording medium which has excellent electric charge retaining characteristics.

### Background Art

There has heretofore been a known electrophotographic technique in which a photoconductive layer deposited on an electrode layer is fully charged and then subjected to image exposure, and the electric charge in the exposed regions is leaked, thereby optically forming an electrostatic latent image on the photoconductive layer, and thereafter toner having an electric charge which is opposite in polarity to the residual electric charge is allowed to adhere thereto, thereby developing the image on paper or the like by electrostatic transfer. This technique is mainly employed for copying purposes. The electrostatic charge retaining period in the photoconductive layer as a recording medium is short, so that toner development is carried out immediately after the formation of an electrostatic latent image. This technique cannot be used for photographing purposes because of low sensitivity.

In the meantime, an electrostatic information recording method by exposure carried out under voltage application has been developed in which an electrostatic information recording medium is disposed face-to-face with a photosensitive member having a photoconductive layer provided on an electrode, and image exposure is carried out with a voltage being applied between the respective electrodes of the photosensitive member and the recording medium, thereby recording an electrostatic latent image of extremely high resolution. It is extremely important that the electrostatic information recording medium used in this electrostatic information recording method should have excellent electric charge retaining characteristics.

It is an object of the present invention to provide an electrostatic information recording medium designed to record information in the form of electric potential, particularly an electrostatic information recording medium with excellent electric charge retaining characteristics.

### Disclosure of the Invention

The present invention provides an electrostatic information recording medium having at least an electrode layer and an electric charge retaining layer, wherein the electric charge retaining layer comprises a fluorine-containing thermoplastic resin consisting of a repeating unit of a ring structure represented by formula (1) and/or formula (2): 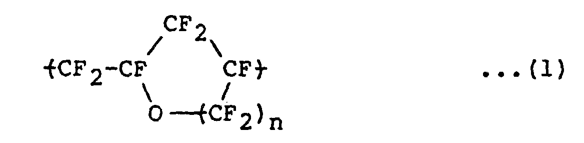 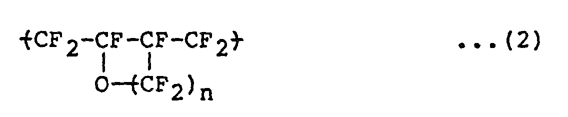 (where n is 1 or 2)
the fluorine-containing thermoplastic resin having such a molecular weight that the intrinsic viscosity at 30°C is at least 0.1.

In addition, the present invention provides an electrostatic information recording medium having at least an electrode layer and an electric charge retaining layer, wherein the electric charge retaining layer comprises a fluorine-containing thermoplastic resin consisting of a repeating unit (a) of a ring structure represented by formula (1) and/or formula (2): 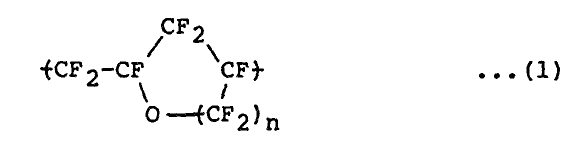 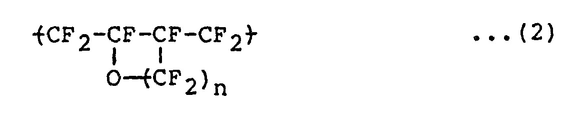 (where n is 1 or 2)
and a repeating unit (b) represented by formula (3):

-(CF₂-CFX)- (3)

(where X is F, Cℓ, -O-CF₂CF₂CF₃,
-O-CF₂CF(CF₃)OCF₂CF₂SO₃F, or -O-CF₂CF₂CF₂COOCH₃)
the fluorine-containing thermoplastic resin containing at least 80% by weight of repeating unit (a) and having such a molecular weight that the intrinsic viscosity at 30°C is at least 0.1.

These resins are fluorine-containing resins with a specific resistance of 1 x 10¹⁴ ohm-cm or more, which are superior in electric charge retaining performance and capable of storing information electric charge extremely stably. When the recorded information is to be reproduced, the potential difference between the electrode and the surface potential can be readily detected by potentiometry. Thus, the recorded electric charge can be readily reproduced as information of high quality and high resolution.

### Brief Description of the Drawings

Fig. 1 shows sections of various forms of the electrostatic information recording medium according to the present invention;
Fig. 2 illustrates a method of recording electrostatic information onto an electrostatic information recording medium of the present invention;
Fig. 3 illustrates one example of DC amplification type potential reading method; and
Fig. 4 schematically illustrates the arrangement of an electrostatic information recording and reproducing method using an electrostatic information recording medium of the present invention.

### Best Mode for Carrying Out the Invention

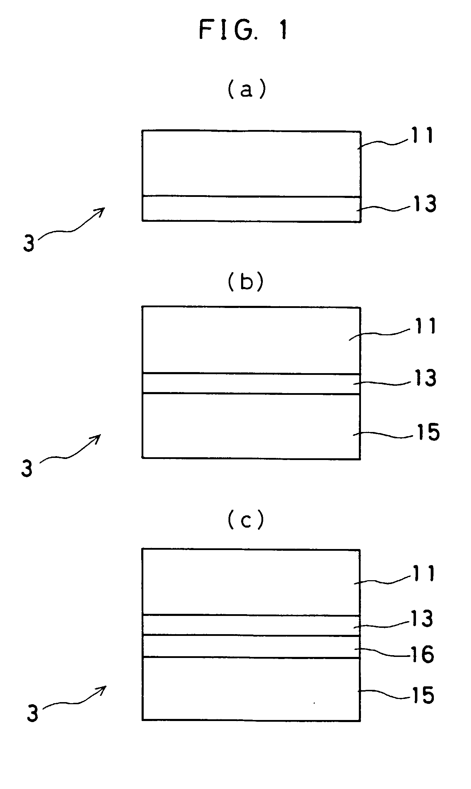

Fig. 1(a), 1(b) and 1(c) are sectional views exemplarily showing various forms of the electrostatic information recording medium 3 according to the present invention, in which reference numeral 3 denotes an electrostatic information recording medium, 11 an electric charge retaining layer, 13 an electrode, 15 a substrate, and 16 an adhesive layer.

The electric charge retaining layer 11 is suitably formed using either a fluorine-containing thermoplastic resin consisting of a repeating unit of a ring structure represented by formula (1) and/or formula (2): 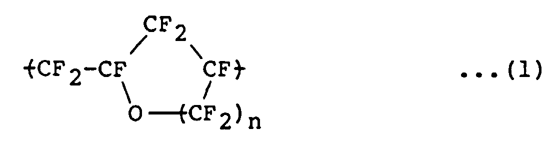 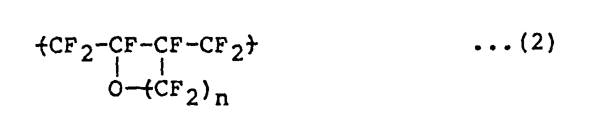 (where n is 1 or 2)
the fluorine-containing thermoplastic resin having such a molecular weight that the intrinsic viscosity at 30°C is at least 0.1, or a fluorine-containing thermoplastic resin consisting of a repeating unit (a) of a ring structure represented by formula (1) and/or formula (2): 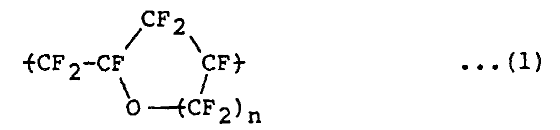 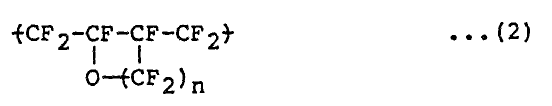 (where n is 1 or 2)
and a repeating unit (b) represented by formula (3):

-(CF₂-CFX)- (3)

(where X is F, Cℓ, -O-CF₂CF₂CF₃,
-O-CF₂CF(CF₃)OCF₂CF₂SO₃F, or -O-CF₂CF₂CF₂COOCH₃)
the fluorine-containing thermoplastic resin containing at least 80% by weight of repeating unit (a) and having such a molecular weight that the intrinsic viscosity at 30°C is at least 0.1.

The repeating unit (a) is obtained by radical cyclopolymerization of a perfluoroarylvinyl ether or perfluorobutenylvinyl ether represented by formula:

CF₂=CF-O-(CF₂)ₙCF=CF₂

(where n is 1 or 2).

A fluorine-containing thermoplastic resin that contains both the repeating units (a) and (b) is obtained by radical polymerization of a perfluorovinyl ether represented by formula:

CF₂=CF-O- (CF₂)ₙCF=CF₂

(where n is 1 or 2) and a monomer represented by formula:

CF₂=CFX

(where X is F, Cℓ, -O-CF₂CF₂CF₃,
-O-CF₂CF(CF₃)OCF₂CF₂SO₃F, or -O-CF₂CF₂CF₂COOCH₃)

These resins are disclosed, for example, in Japanese Patent Application Laid-Open (KOKAI) No. 01-131215.

We have found that the above-described fluorocarbon resins have a high resistivity, excellent electric charge retaining performance and low water absorption and hence enable minimization of the leakage of electric charge in the direction of the film thickness or in the transverse direction at the surface due to a lowering in the resistivity caused by adsorption of water, and these materials exhibit excellent electric charge retaining performance under the conditions of high humidity and temperature and have a minimal change of the stored electric charge with time. Thus, information electric charge can be stored for a long period of time.

The above-described resins are soluble in a fluorine-containing solvent and hence superior in processability. In particular, since coating is possible, these materials are used advantageously to provide a uniform film thickness over a predetermined area or obtain a film thickness of several µm.

The electrostatic information recording medium of the present invention may be used in various forms. First, in the case of the electrostatic information recording medium shown in Fig. 1(a), an electrode is stacked on an electric charge retaining layer 11 comprising the above-described polymer film. In the electrostatic information recording medium shown in Fig. 1(b), an electrode 13 and an electric charge retaining layer 11 are successively staked on a substrate 15. In the electrostatic information recording medium shown in Fig. 1(c), an electrode 13 is bonded to a substrate through an adhesive layer, for example, of a one- or two-part setting isocyanate or epoxy adhesive, and an electric charge retaining layer 11 of the above-described polymer is stacked on the electrode 13.

The electrode side of the electrostatic information recording medium shown in Fig. 1(a) may be bonded to a substrate by use of the above-described adhesive.

To provide the electric charge retaining layer by coating, it is preferable to coat the electrode with a solution obtained by dissolving the above-described polymer in a fluorine-containing solvent, for example, perfluoro-(2-butyltetrahydrofuran).

The thickness of the electric charge retaining layer is preferably in the range of from 0,01 µm to 100 µm. If the layer thickness is less than 0,1 µm, the electric charge retained leaks, whereas, if the layer thickness exceeds 100 µm, flexibility is lost.

In addition, the electric charge retaining layer may contain photoconductive or electrically conductive fine particles in order to enhance the electric charge storing function.

Examples of usable photoconductive materials are inorganic photoconductive materials such as amorphous silicon, crystalline silicon, amorphous selenium, crystalline selenium, cadmium sulfide, zinc oxide, etc., and organic photoconductive materials such as polyvinylcarbazole, phthalocyanine, azo pigment, etc.

Examples of usable electrically conductive materials are elements of the following groups in the periodic table: the group 1A (alkali metals), the group 1B (copper group), the group 2A (alkaline earth metals), the group 2B (zinc group), the group 3A (aluminum group), the group 3B (rare earth elements), the group IVB (titanium group), the group VB (vanadium group), the group VIB (chromium group), the group VIIB (manganese group), the group VIII (iron group and platinum group), group IVA (carbon group) elements, i.e., carbon, silicon, germanium, tin and lead, group VA (nitrogen group) elements, i.e., antimony and bismuth, and group VIA (oxygen group) elements, i.e., sulfur, selenium and tellurium. These materials are used in the form of fine powder. Among the above-described elements, the metals may also be used in the form of metal ions or fine particles of alloys, organic metal compounds or complexes. Further, the above-described elements may be used in the form of oxides, phosphides, sulfides or halides. Carbon, gold, copper, and aluminum are particularly preferable.

To allow the fine particles to be present in the fluorocarbon resin layer, the former is deposited on the latter by use of a low-pressure deposition apparatus When evaporated at a low pressure of about 1.33 x 10³ Pa to 0.133 Pa (10 Torr to 10⁻³ Torr), the particle layer forming material condenses in the form of ultrafine particles having a diameter of about 10 to 0.1 µm, which are stacked in the form of a single layer or a plurality of aligned layers inside the fluorocarbon resin layer in the vicinity of the surface thereof. The fine particle material may be dispersed in the fluorocarbon resin solution when the fluorocarbon resin layer is formed by coating.

The electrostatic information recording medium 3 is designed to record information on the electric charge retaining layer 11 in the form of a distribution of electrostatic charges. Accordingly, the electrostatic information recording medium may be formed in various shapes in accordance with the kind of information to be recorded or the recording method employed. For example, when the electrostatic information recording medium is used for a camera, it is formed in the shape of ordinary film (for single frame or for a series of frames), a disk or a card. when digital or analog information is to be recorded thereon by laser or the like, the electrostatic information recording medium is formed in the shape of a tape, a disk or a card.

The substrate 15 in the electrostatic information recording medium shown in Fig. 1(b) is employed to support the electrostatic information recording medium 3. Accordingly, there are no specific restrictions on the thickness and material of the substrate, provided that it is sufficiently strong to support the electric charge retaining layer. Examples of usable materials are a flexible plastic film, metal foil, paper, or a rigid material such as glass, plastic sheet, metal sheet (capable of serving also as an electrode), etc. There are cases where the substrate 15 needs to be capable of transmitting light. In such cases, if necessary, anti-reflection properties can be given by providing a layer having anti-reflection effect, or adjusting the film thickness to a level at which anti-reflectioneffect is obtainable, or combining these two. When the electrostatic information recording medium 3 is formed in the shape of a flexible film, tape, disk or card, a flexible plastic film is used as the substrate. When the electrostatic information recording medium 3 is required to have a certain level of strength, a rigid sheet or inorganic material, for example, glass, is used as the substrate.

The electrode 13 may be formed on the substrate through the adhesive layer 16. Alternatively, the electrode 13 may be formed on the substrate by vapor deposition or the like. There is no restriction on the material of the electrode 13, provided that the specific resistance of the material is not higher than 10⁶ ohm-cm. Examples of such material are an inorganic metallic conductive film, an inorganic metallic oxide conductive film, and an organic conductive film, e.g., quarternary ammonium salt, and so forth. Such an electrode is formed on the substrate by evaporation, sputtering, CVD, coating, plating, dipping, electrolytic polymerization or the like. The layer thickness of the electrode needs to be changed depending upon the electrical characteristics of the material thereof and the level of voltage applied to record information. If the electrode is made of aluminum, for example, the thickness is about from 100 to 3,000 Å. The electrode 13 may be formed either on the whole area between the substrate and the electric charge retaining layer or in conformity with the pattern of the electric charge retaining layer formed.

If the electrode 13 is required to be capable of transmitting light, anti-reflection properties can be given by providing a layer having anti-reflection effect, or adjusting the layer thickness to a level at which anti-reflection effect is obtainable, or combining these two, according to need.

The surface of the electrostatic information recording medium of the present invention is preferably formed with a protective film after recording of information to protect the surface against damage and prevent decay of the stored information electric charge. As the protective film, a plastic film may be used. Alternatively, the protective film may be formed by coating of a plastics solution or by vapor deposition or the like to a thickness of from several hundreds Å to several tens µm. In this order of thickness, the stored information can be reproduced without hindrance.

Examples of preferred materials usable for the protective film are regenerated rubber, styrene-butadiene rubber, polyisoprene, butyl rubber, Buna-N (butadiene acrylonitrile rubber), polyvinyl ethers (having an ethyl radical or a larger hydrocarbon radical as an alcohol residue), polyacrylate esters (having an ethyl radical or a larger hydrocarbon radical), silicone rubber, polyterpene resin, gum rosin, rosin esters, rosin derivatives, oil-soluble phenolic resins, coumarone-indene resins, and petroleum hydrocarbon resins, which have adhesiveness required to bond the protective film to the electrostatic information recording medium and separate the former from the latter when the stored information is to be reproduced. These materials may be employed alone or in the form of a mixture of two or more of them to form a protective film with a thickness of from 0.5 to several tens µm, which is bonded to the surface of the electrostatic information recording medium. It is also possible to bond a plastic film usable as an electric charge retaining layer forming material described above by use of a reseasable adhesive. Examples of usable releasable adhesives are silicone oil, dimethyl silicone oil, methyl phenyl silicone oil, higher fatty acid modified silicone oil, methyl chlorinated phenyl silicone oil, alkyl modified silicone oil, methyl hydrogen silicone oil, cyclic polydimethylsiloxane, silicone-polyether copolymer, amino modified silicone oil, epoxy modified silicone oil, and insulating oil, which have a specific resistance of 10¹⁴ ohm-cm or more. These materials may be used alone or in the form of a mixture of two or more of them.

It is also possible to use the above-described fluorocarbon resins to form a protective film by vapor deposition, spinner coating or the like so that the thickness is in the range of from several hundreds Å to several tens µm.

In a case where the electrostatic information recording medium needs to be endowed with photosensitivity at the same time, the electric charge retaining layer may be provided on the surface of a photosensitive memeber having a photoconductive layer by means of coating or bonding.

An electrostatic information recording method, which is one of the uses of the electrostatic information recording medium of the present invention, will next be explained below.

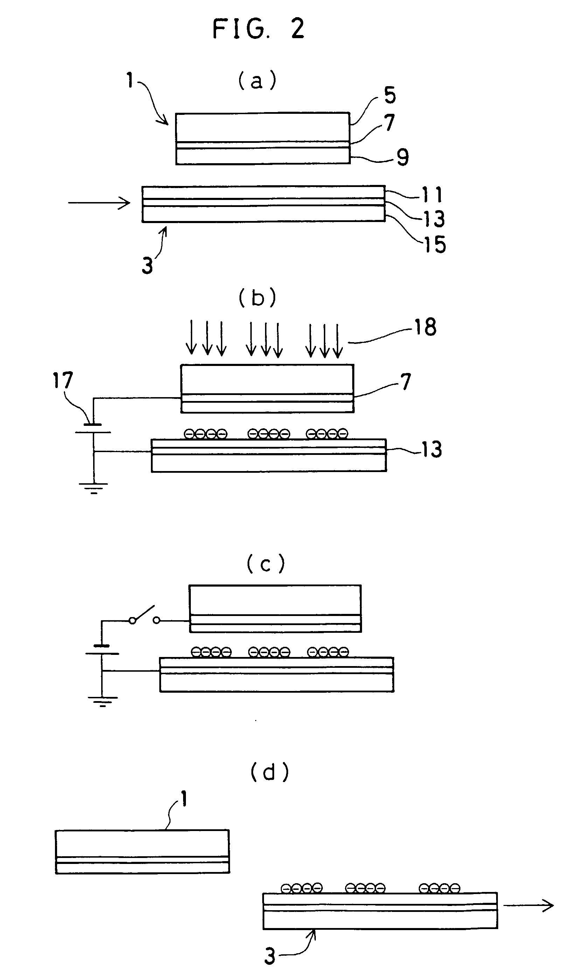

Fig. 2 is a view for explanation of the electrostatic information recording method, in which reference numeral 1 denotes a photosensitive member, 5 a photoconductive layer substrate, 7 a photosensitive member electrode, 9 a photoconductive layer, and 17 a power supply.

First, a transparent photosensitive member electrode 7 of ITO having a thickness of 1,000 Å is formed on a photoconductive layer substrate 5 of glass having a thickness of 1 mm, and a photoconductive layer 9 with a thickness of about 10 µm is formed thereon to form a photosensitive member 1. As shown in Fig. 2(a), the electrostatic information recording medium 3 is disposed face-to-face with the photosensitive member 1 across an air gap of about 10 µm.

Next, a voltage is applied between the electrodes 7 and 13 from the power supply 17, as shown in Fig. 2(b). If the photosensitive member 1 and the electrostatic information recording medium 3 are placed in the dark, since the photoconductive layer 9 is a highly resistive element, no change occurs between the electrodes as long as the voltage applied across the air gap is lower than the discharge initiating voltage according to Paschen's law. When a voltage that exceeds the discharge initiating voltage is applied across the air gap from an external power supply, an electric discharge is induced, so that an electric charge is stored on the electrostatic information recording medium. This state continues until the applied voltage lowers down to the discharge initiating voltage, thus forming a background electric charge. When light 18 is applied from the photosensitive member side, regions of the photoconductive layer 9 where the light is incident become electrically conductive, inducing an electric discharge, and thus allowing an electric charge to be stored on the electrostatic information recording medium. In a case where a uniform background electric charge has been provided in advance, an electric charge is further stored in the regions where the light is incident. Then, the power supply 17 is turned off, and the electrostatic information recording medium 3 is separated from the photosensitive member 1, thus completing the formation of an electrostatic latent image.

When planar analog recording is effected by this electrostatic information recording method, a high resolution is obtained in the same way as in the silver halide photography, and the recorded information can be stored for a long period of time without being discharged.

As a method of inputting information to the electrostatic information recording medium of the present invention, a method using a high-resolution electrostatic camera or a recording method using laser may be employed. The high-resolution electrostatic camera that is used in the present invention employs, in place of a photographic film used in ordinary cameras, a recording member which is formed from a photosensitive member 1 comprising a photoconductive layer 9 having a photosensitive member electrode 7 provided on the front side and an electrostatic information recording medium comprising an electric charge retaining layer 11 facing opposite to the photosensitive member 1 and having an electrostatic information recording medium electrode 13 on the rear side. With a voltage being applied to the two electrodes, the photoconductive layer is made electrically conductive in accordance with the incident light to store an electric charge on the electric charge retaining layer in accordance with the quantity of incident light, thereby forming an electrostatic latent image of the incident optical image. Either a mechanical or electric shutter can be used for this camera. The electrostatic latent image can be stored for a long period of time regardless of whether it is placed in the light or dark place. It is also possible to conduct color photography by using a color filter by which light information is separated into R, G and B light components and taken out in the form of parallel rays through prisms, and forming one frame from the electrostatic information recording medium separated into R, G and B light components or from one set of R, G and B images arranged on one plane.

In the recording method by laser, argon laser (514 nm, 488 nm), helium-neon laser (633 nm) or semiconductor laser (780 nm, 810 nm, etc.) may be used as a light source. The photosensitive member and the electrostatic information recording medium are brought into close contact with each other at their surfaces or they are placed so as to face each other at a predetermined distance, and a voltage is applied thereto. In this case, it is preferable to set the photosensitive member electrode so as to have the same polarity as that of carriers in the photosensitive member. Under such conditions, laser exposure corresponding to a picture image signal, character signal, code signal or line drawing signal is performed by scanning. Analog recording such as that of a picture image is effected by modulating the intensity of laser light, whereas digital recording such as that of characters, code or line drawing is effected by on/off control of laser light. A picture image consisting of halftone dots is formed by on/off controlling laser light through a dot generator. It should be noted that the photoconductive layer in the photosensitive member need not have panchromatic spectral characteristics, but it is only required to have sensitivity to the wavelength of the laser light source employed.

A method of reproducing the electrostatic information recorded on the electrostatic information recording medium will next be explained.

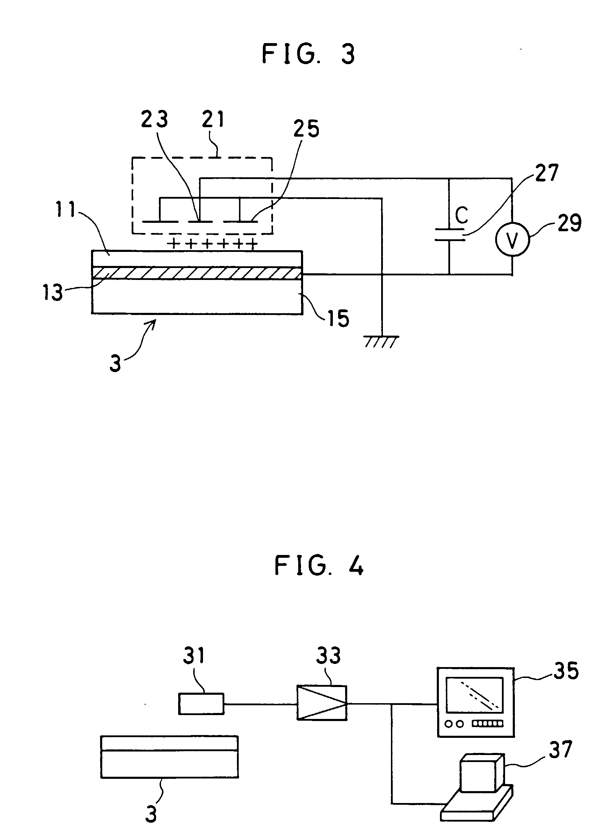

Fig. 3 shows an example of an electric potential reading method in the electrostatic information recording and reproducing method, in which the same reference numerals as those shown in Fig. 1 denote the same contents. In this figure, reference numeral 21 denotes an electric potential reading unit, 23 a detection electrode, 25 a guard electrode, 27 a capacitor, and 29 a voltmeter.

To reproduce the information electric charge stored on the electrostatic information recording medium, first, the electric potential reading unit 21 is placed face-to-face with the surface of the electrostatic information recording medium 3. In consequence, an electric field that is generated by the electric charge stored in the fine particle layer acts on the detection electrode 23, and an electric charge equivalent to the electric charge on the electrostatic information recording medium is induced on the surface of the detection electrode 23. Since the capacitor 27 is charged with an electric charge equivalent in quantity but opposite in polarity to the induced charge, a potential difference according to the stored electric charge is produced between the electrodes of the capacitor. By reading this value with the voltmeter 29, the electric potential of the information electric charge can be obtained. By scanning the surface of the electrostatic information recording medium with the electric potential reading unit 21, an electrostatic latent image can be output in the form of an electric signal. It should be noted that, when the detection electrode 23 alone is used, the resolution may be reduced by the action of an electric field (electric lines of force) produced by the electric charge in a wider range than the region of the electrostatic information recording medium which faces the detection electrode. Therefore, a guard electrode 25 which is grounded may be disposed around the detection electrode. Thus, the electric lines of force are directed to extend perpendicularly to the plane, so that the electric lines of force only in the region facing the detection electrode 23 act. This makes it possible to read the electric potential at a region which has approximately the same area as that of the detection electrode. Because the accuracy and resolution of the potential reading greatly depend upon the shape and size of the detection electrode and the guard electrode, together with the distance from the electrostatic information recording medium, it is essential to design on the basis of optimal conditions obtained in conformity with the required performance.

The potential may also be read optically by the photoelectric effect using a material having an electrooptic effect, for example, an optical crystal, e.g., LiNbO₃, or an organic optical material, e.g., a liquid crystal.

Fig. 4 schematically shows an arrangement which may be employed to carry out the electrostatic information reproducing method. In the figure, reference numeral 31 denotes a potential reading unit, 33 an amplifier, 35 a CRT, and 37 a printer.

Referring to the figure, the electric charge potential is detected with the potential reading unit 31, and the detected output is amplified in the amplifier 33 and displayed on the CRT 35. It can also be printed out from the printer 37. In this case, it is possible to select any portion which is desired to read and to output the read potential at any desired time. It is also possible to reproduce the information repeatedly. In addition, it is also possible to read optically by use of a material whose optical properties change with the electric field, for example, an electrooptic crystal. Since the electrostatic latent image can be obtained in the form of an electric signal, it can also be utilized for, for example, recording onto another recording medium, if necessary.

The electric charge retaining layer in the electrostatic information recording medium needs to be formed from a polymeric material of high insulation quality so as to have good insulation properties in order to suppress the movement of electric charge. The present invention has been accomplished on the basis of the finding that specific fluorine-containing resins have extremely excellent electric charge retaining performance. In addition, a polymeric material used to form the electric charge retaining layer in the electrostatic information recording medium needs to have heat resistance as one of the physical properties, and fluorocarbon resins have high heat resistance.

In general, electrostatic information recording media are required to prevent leakage of information electric charge due to the effect of humidity. Therefore, a polymeric material used to form the electric charge retaining layer needs to have a low water absorption. Fluorine-containing resins have an extremely low water absorption and hence make it possible to obtain an electrostatic information recording medium of extremely high electric charge retaining performance.

The electrostatic information recording medium of the present invention can also be used for an electrostatic recording method that employs an electrode stylus head or an ion beam head, or a recording method that employs an optical printer, e.g., a laser printer, or a recording method that employs an electron beam, ion implantation, etc. However, the electrostatic information recording medium of the present invention is particularly suitable for a recording method that employs a photosensitive member.

Examples will be explained below.

### [Example 1]

On a glass substrate of 1 mm thick, an Aℓ electrode was stacked to a thickness of 1,000 Å by vacuum deposition method [1.33 x 10⁻³ Pa (10-⁵ Torr)]. The surface of the Aℓ electrode was coated by a spin coater for 20 sec at 1,500 rpm with a perfluoro-(2-butyltetrahydrofuran) solution of 5% a polymer having the repeating unit of the above-described formula (1) (n=1), an intrinsic viscosity [η] of 0.50 at 30°C in a solvent containing Florinato FC-75 (Trade Name; perfluoro-(2-butyltetrahydrofuran) manufactured by 3M (K.K.)) as a principal component, a glass transition temperature of 69°C, a water absorption of 0.01%, and a specific resistance of 1 x 10¹⁸ ohm-cm, and then subjected to drying, thereby producing an electrostatic information recording medium with an electric charge retaining layer having a thickness of about 3 µm.

The surface of the electrostatic information recording medium thus obtained was charged electrically by corona charging so that the surface potential was -100 V, and the electric charge retaining performance was measured.

The surface potential measured after the electrostatic information recording medium had been allowed to stand for 30 days under the conditions of ordinary temperature and humidity was -93 V. Even after the electrostatic information recording medium had been allowed to stand for 30 days under the accelerated test circumstances of 60°C and 20% RH, it still retained a surface potential of -78 V. Even after the electrostatic information recording medium had been allowed to stand for 30 days under the high-humidity conditions of 40°C and 95% RH, it still maintained a surface potential of -90 V.

### [Example 2]

On a glass substrate of 1 mm thick, an Aℓ electrode was stacked to a thickness of 1,000 Å by vacuum deposition method [1.33 x 10⁻³ Pa (10-⁵ Torr)]. The surface of the Aℓ electrode was coated by a spin coater for 20 sec at 1,500 rpm with a perfluoro-(2-butyltetrahydrofuran) solution of 7% a polymer having the repeating units of the above-described formulae (1) (n=2) and (2) (n=2), an intrinsic viscosity [η] of 0.55 at 30°C in a solvent containing Florinato FC-75 (Trade Name; perfluoro-(2-butyltetrahydrofuran) manufactured by 3M (K.K.)) as a principal component, a glass transition temperature of 108°C, a water absorption of 0.01%, and a specific resistance of 1 x 10¹⁸ ohm-cm, and then subjected to drying, thereby producing an electrostatic information recording medium with an electric charge retaining layer having a thickness of about 3 µm.

The surface of the electrostatic information recording medium thus obtained was charged electrically by corona charging so that the surface potential was -100 V, and the electric charge retaining performance was measured.

The surface potential measured after the electrostatic information recording medium had been allowed to stand for 30 days under the conditions of ordinary temperature and humidity was -90 V. Even after the electrostatic information recording medium had been allowed to stand for 30 days under the accelerated test circumstances of 60°C and 20% RH, it still retained a surface potential of -85 V. Even after the electrostatic information recording medium had been allowed to stand for 30 days under the high-humidity conditions of 40°C and 95% RH, it still maintained a surface potential of -90 V.

### [Example 3]

On a glass substrate of 1 mm thick, an Aℓ electrode was stacked to a thickness of 1,000 Å by vacuum deposition method [1.33 x 10⁻³ Pa [10-⁵ Torr)]. The surface of the Aℓ electrode was coated by a spin coater with a perfluoro-(2-butyltetrahydrofuran) solution of 5% a polymer having the repeating units of the above-described formulae (1) (blend of n=1 and n=2) and (2) (n=2), containing 54% by weight of a ring structure unit derived from a perfluoroarylvinyl ether, and having an intrinsic viscosity [η] of 0.44 at 30°C in a solvent containing Florinato FC-75 (Trade Name; perfluoro-(2-butyltetrahydrofuran) manufactured by 3M (K.K.)) as a principal component, a glass transition temperature of 91°C, a water absorption of 0.01%, and a specific resistance of 1 x 10¹⁸ ohm-cm, and then subjected to drying, thereby producing an electrostatic information recording medium with an electric charge retaining layer having a thickness of about 3 µm.

The surface of the electrostatic information recording medium thus obtained was charged electrically by corona charging so that the surface potential was -100 V, and the electric charge retaining performance was measured.

The surface potential measured after the electrostatic information recording medium had been allowed to stand for 30 days under the conditions of ordinary temperature and humidity was -90 V. Even after the electrostatic information recording medium had been allowed to stand for 30 days under the accelerated test circumstances of 60°C and 20% RH, it still retained a surface potential of -80 V. Even after the electrostatic information recording medium had been allowed to stand for 30 days under the high-humidity conditions of 40°C and 95% RH, it still maintained a surface potential of -90 V.

### [Example 4]

On a glass substrate of 1 mm thick, an Aℓ electrode was stacked to a thickness of 1,000 Å by vacuum deposition method [1.33 x 10⁻³ Pa (10⁻⁵ Torr)]. The surface of the Aℓ electrode was coated by a spin coater with a perfluoro-(2-butyltetrahydrofuran) solution of 5% a polymer having the repeating units respectively represented by the above-described formula (1) (n=1) and -(CF₂-CF₂)-, containing 81% by weight of a ring structure unit derived from a perfluoroarylvinyl ether, and having an intrinsic viscosity [η] of 0.425 at 30°C in a solvent containing Florinato FC-75 (Trade Name; perfluoro-(2-butyltetrahydrofuran) manufactured by 3M (K.K.)) as a principal component, a water absorption of 0.01%, and a specific resistance of 1 x 10¹⁸ ohm-cm, and then subjected to drying, thereby producing an electrostatic information recording medium with an electric charge retaining layer having a thickness of about 3 µm.

The surface of the electrostatic information recording medium thus obtained was charged electrically by corona charging so that the surface potential was -100 V, and the electric charge retaining performance was measured.

The surface potential measured after the electrostatic information recording medium had been allowed to stand for 30 days under the conditions of ordinary temperature and humidity was -93 V. Even after the electrostatic information recording medium had been allowed to stand for 30 days under the accelerated test circumstances of 60°C and 20% RH, it still retained a surface potential of -70 V. Even after the electrostatic information recording medium had been allowed to stand for 30 days under the high-humidity conditions of 40°C and 95% RH, it still maintained a surface potential of -90 V.

### [Example 5]

On a glass substrate of 1 mm thick, an Aℓ electrode was stacked to a thickness of 1,000 Å by vacuum deposition method [1.33 x 10⁻³ Pa (10⁻⁵ Torr)]. The surface of the Aℓ electrode was coated by a spin coater with a perfluoro-(2-butyltetrahydrofuran) solution of 5% a polymer having the repeating units respectively represented by the above-described formula (1) (n=1) and 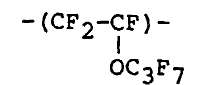 and containing 89% by weight of a ring structure unit derived from a perfluoroarylvinyl ether, and further having an intrinsic viscosity [η] of 0.35 at 30°C in a solvent containing Florinato FC-75 (Trade Name; perfluoro-(2-butyltetrahydrofuran) manufactured by 3M (K.K.)) as a principal component, a glass transition temperature of 61°C, a water absorption of 0.01%, and a specific resistance of 1 x 10¹⁸ ohm-cm, and then subjected to drying, thereby producing an electrostatic information recording medium with an electric charge retaining layer having a thickness of about 3 µm.

The surface of the electrostatic information recording medium thus obtained was charged electrically by corona charging so that the surface potential was -100 V, and the electric charge retaining performance was measured.

The surface potential measured after the electrostatic information recording medium had been allowed to stand for 30 days under the conditions of ordinary temperature and humidity was -90 V. Even after the electrostatic information recording medium had been allowed to stand for 30 days under the accelerated test circumstances of 60°C and 20% RH, it still retained a surface potential of -60 V. Even after the electrostatic information recording medium had been allowed to stand for 30 days under the high-humidity conditions of 40°C and 95% RH, it still maintained a surface potential of -90 V.

### [Example 7]

### (Method of Preparation of Single-Layer Organic Photosensitive Member (PVK-TNF))

A mixture having a composition consisting essentially of 10 g of poly-N-vinylcarbazole (manufactured by Anan Koryo (K.K.)), 10 g of 2,4,7-trinitrofluorenone, 2 g of polyester resin (binder: Byron 200; manufactured by Toyobo (K.K.)), and 90 g of tetrahydrofuran (THF) was prepared in the dark and applied by use of a doctor blade to a glass substrate (1 mm thick) having In₂O₃-SnO₂ deposited thereon to a thickness of about 1,000 Å by sputtering, and then subjected to through-flow drying for about 1 hour at 60°C, thereby obtaining a photosensitive member having a photoconductive layer with a thickness of about 10 µm. The photosensitive member was further dried naturally for 1 day in order to dry it completely before use.

### (Electrostatic Information Recording and Reproducing Method)

The single-layer organic photosensitive member (PVK-TNF) 1 prepared above and the electrostatic information recording medium prepared in Example 2 were placed face-to-face with each other across an air gap of 10 µm that was defined by a spacer comprising a polyester film of 10 pm thick so that the surface of the electrostatic information recording medium and the photoconductive layer side of the photosensitive member faced opposite to each other, as shown in Fig. 3, and grounded. Then, a DC voltage of 100 V was applied between the two electrodes with the photosensitive member side being defined as a negative electrode, and the resin layer side as a positive electrode.

With the voltage being applied in this way, exposure was carried out for 1 second from the photosensitive member side with a 1,000 lux halogen lamp used as a light source, thus completing formation of an electrostatic latent image.

Then, the potential difference between the electrode and the surface of the medium was measured, as shown in Fig. 4. As a result, a surface potential of -100 V was measured at the surface of the medium with a surface potential measuring device, while the surface potential at the unexposed region was 0 V. The medium that was subjected to exposure and voltage application by use of a gray use in the same way as the above had a surface potential pattern recorded thereon in analog form in the range of from 0 to 100 V. Even after the medium had been allowed to stand for 1 year at room temperature, the same surface potential was maintained.

### Industrial Applicability

The electrostatic information recording medium of the present invention is capable of permanently retaining information electric charge stored in the electric charge retaining layer, and the surface electric charge that is formed by the stored electric charge can be readily detected by a potential reading method in which the potetial difference between the surface and the electrode is measured. In addition, it is possible to output an electric signal corresponding to the electrostatic latent image and display it on a CRT or print it out by a printer.

Further, since the information storage means is arranged in units of electrostatic charge, the electrostatic information recording medium can store information of high quality and high resolution. In addition, the processing procedure is simple and easy, and information can be stored for a long period of time. The stored information can be repeatedly reproduced as desired with image quality that is fit for each purpose.

## Claims

1. An electrostatic information recording medium having at least an electrode layer and an electric charge retaining layer, wherein said electric charge retaining layer comprises a fluorine-containing thermoplastic resin consisting of a repeating unit (a) of a ring structure represented by formula (1) and/or formula (2): 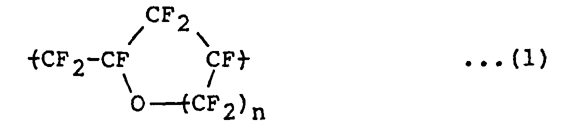 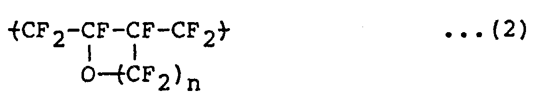 (where n is 1 or 2)
said fluorine-containing thermoplastic resin having such a molecular weight that the intrinsic viscosity at 30°C is at least 0.1

2. An electrostatic information recording medium as claimed in claim 1 wherein said fluorine-containing thermoplastic resin consists of at least 80 % by weight of said repeating unit (a) and further comprises a repeating unit (b) represented by formula (3):
-(CF₂-CFX)- (3)
(where X is F, Cℓ, -O-CF₂CF₂CF₃,
-O-CF₂CF(CF₃)OCF₂CF₂SO₃F, or -O-CF₂CF₂CF₂COOCH₃)

## Patentansprüche

1. Elektrostatisches Informationsaufzeichnungsmedium mit wenigstens einer Elektrodenschicht und einer Rückhalteschicht für eine elektrische Ladung, wobei die Rückhalteschicht für die elektrische Ladung ein Fluor enthaltendes thermoplastisches Harz umfaßt, das aus einer sich wiederholenden Einheit (a) einer Ringstruktur, dargestellt durch Formel (1) und/oder Formel (2), besteht: 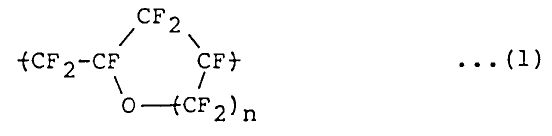 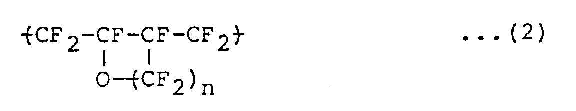 (wobei n 1 oder 2 ist),
wobei das Fluor enthaltende thermoplastische Harz ein derartiges Molekulargewicht besitzt, daß die intrinsische Viskosität bei 30°C wenigstens 0,1 beträgt.

2. Elektrostatisches Informationsaufzeichnungsmedium nach Anspruch 1, wobei das Fluor enthaltende thermoplastische Harz aus wenigstens 80 Gew.% der sich wiederholenden Einheit (a) besteht und ferner eine sich wiederholende Einheit (b), dargestellt durch Formel (3), umfaßt:
-(CF₂-CFX)- (3)
(wobei X ist: F, Cl, -O-CF₂CF₂CF₃,
-O-CF₂CF(CF₃)OCF₂CF₂SO₃F, oder -O-CF₂CF₂CF₂COOCH₃).

## Revendications

1. Support d'enregistrement électrostatique d'informations ayant au moins une couche électrode et une couche de retenue des charges électriques, dans lequel ladite couche de retenue des charges électriques comprend une résine thermoplastique fluorée comprenant un motif répétitif (a) d'une structure cyclique représentée par la formule (1) et/ou la formule (2) : 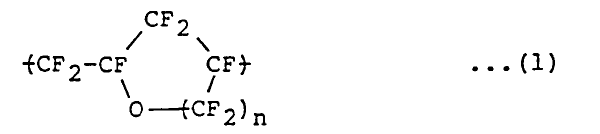 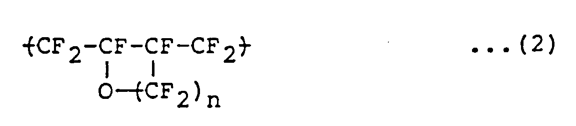 (dans lesquelles n est égal à 1 ou 2)
ladite résine thermoplastique fluorée ayant un poids moléculaire tel que la viscosité intrinsèque à 30°C est au moins 0,1.

2. Support d'enregistrement électrostatique d'informations selon la revendication 1, dans lequel ladite résine thermoplastique fluorée comprend au moins 80% en poids dudit motif répétitif (a) et comprend en outre un motif répétitif (b) représenté par la formule (3) :
-(CF₂-CFX)- (3)
(dans laquelle X est F, Cl, -O-CF₂CF₂CF₃,
-O-CF₂CF(CF₃)OCF₂CF₂SO₃F, ou -O-CF₂CF₂CF₂COOCH₃)
